# EUROPÄISCHE PATENTSCHRIFT

(11) **EP 3 472 744 B1**
(45) Veröffentlichungstag und Bekanntmachung des Hinweises auf die Patenterteilung: **17.09.2025**
(21) Anmeldenummer: 17729010.3
(22) Anmeldetag: 31.05.2017
(51) Int. Cl.: G06F 21/31, G06F 21/44, H04L 9/40, H04W 4/02, H04W 12/06, H04W 4/029

(54) **AUTHENTIFIZIEREN EINES TRAGBAREN ENDGERÄTS**
AUTHENTICATING A PORTABLE TERMINAL DEVICE
AUTHENTIFICATION D'UN TERMINAL PORTABLE

(30) Priorität: 21.06.2016 DE 102016007600
(43) Veröffentlichungstag der Anmeldung: 24.04.2019
(73) Patentinhaber: Giesecke+Devrient ePayments GmbH, 81677 München (DE)
(72) Erfinder: FIEDLER, Michael, 81369 München (DE)
(74) Vertreter: Giesecke+Devrient IP
(86) Internationale Anmeldenummer: PCT/EP2017/000638
(87) Internationale Veröffentlichungsnummer: WO 2017/220184

(56) Entgegenhaltungen:
- WO-A1-2015/030788
- WO-A1-2015/030788
- US-A1- 2013 133 052
- US-A1- 2013 133 052
- US-A1- 2015 288 688
- US-A1- 2015 288 688
- US-B1- 8 864 847
- US-B1- 8 864 847

## Beschreibung

Die vorliegende Erfindung ist gerichtet auf ein Verfahren zum Authentifizieren eines tragbaren Endgeräts mitsamt einem entsprechend eingerichteten Authentifizierungssystem. Die Erfindung ist ferner gerichtet auf ein Computerprogrammprodukt mit Steuerbefehlen, welche das vorgeschlagene Verfahren implementieren bzw. zum Betreiben des Authentifizierungssystems eingerichtet sind. Die vorliegende Erfindung ermöglicht es mit hohem Nutzerkomfort eine Überprüfung vorzuführen, ob eine vorgegebene Identität eines mobilen Endgeräts tatsächlich auch vorliegt.

In einer Vielzahl bekannter Anwendungen ist es notwendig, dass ein Nutzer sich mit einem mobilen Endgerät gegenüber einer Authentisierungsinstanz anmeldet und seine vorgegebene Identität überprüft werden muss. Dies kann beispielsweise bei einem Online-Banking der Fall sein, bei dem der Benutzer ein bestimmtes Gerät bzw. eine Gerätekennung angibt und hierauf auch beispielsweise eine PIN übermittelt bekommt. Problematisch ist dieses Anwendungsszenario, wenn das mobile Endgerät verloren geht bzw. in falsche Hände durch einen Diebstahl gerät. Auch kann es zu einem Identitätsklau derart kommen, dass bestimmte Zugangsdaten gestohlen werden und auf ein anderes mobiles Endgerät aufgespielt werden. Somit ist es besonders nachteilig, dass gemäß dem Stand der Technik Verfahren bzgl. der Authentifizierungsmechanismen fehleranfällig sind.

Gemäß weiteren bekannten Verfahren muss der Nutzer eine Mehrzahl an Daten bereitstellen, um sich gegenüber einem Server zu authentifizieren. Hierbei muss sich der Nutzer die entsprechenden Daten merken und diese genau in der vorgegebenen Form eingeben. Kommt es hierbei zu Eingabefehlern oder hat der Nutzer entsprechende Authentisierungsdaten nicht vorliegen, so kann typischerweise kein Zugriff auf bestimmte nicht öffentliche Bereiche folgen. Auch hierbei ist es möglich, dass der Nutzer deshalb nicht Zugang zu sensiblen Daten bekommt, da er sein Passwort zu oft eingegeben hat und hierbei beispielsweise kleinere Fehler wie Zahlendreher vorgekommen sind. Somit wird auch ein rechtmäßiger Benutzer von sensiblen Daten ausgeschlossen.

Weitere bekannte Authentisierungsverfahren verwenden umfangreiche Hardware, welche beispielsweise einen Card Reader, also ein Kartenlesegerät, voraussetzen. Hierbei ist es notwendig, dass der Nutzer ein physisches Authentisierungsmerkmal mit sich führt, welche er an der entsprechenden Vorrichtung bereithält. Hierzu entsteht typischerweise ein erhöhter technischer Aufwand, da entsprechende Gerätschaften bereitgestellt werden müssen und zudem das entsprechende Authentisierungsmerkmal, beispielsweise eine Smartcard, verloren gehen kann. Führt der Nutzer seine Smartcard nicht mit, so kann er sich eben auch nicht Zugang zu sensiblen Daten verschaffen, obwohl er generell dazu berechtigt wäre.

Die US 2008/0146193 A1 zeigt ein Authentisierungsverfahren, welches auf Geo-Daten abstellt. Hierbei werden die Positionskoordinaten eines Benutzers bzw. seines Smartphones, in einem Datenspeicher abgespeichert und es wird ihm zur Authentisierung eine gewisse Frage (Challenge) gestellt. Kann er diese richtig beantworten, so bekommt er Zugang zu Server-Daten. Hierzu wird jedoch auf den Nutzer abgestellt, wodurch ein erhöhter Aufwand entsteht. Auch können andere Mitmenschen diesen Nutzer beobachten und ggf. auch die Sicherheitsfrage richtig beantworten und sich somit eben auch als der Nutzer ausgeben.

Die JP 2012-133526 A zeigt ein Authentisierungssystem, welches auf einer Ortsinformation und einer Zeitinformation basiert.

US 8864847 B1 beschreibt ein System und ein Verfahren, um mobile Kommunikationsgerät bei Verlust leicht wiederzufinden und vor unberechtigtem Zugriff zu schützen, indem der zeitliche Verlauf genutzt wird, zu welcher Zeit das Kommunikationsgerät an welchem Ort war, wobei Sicherheitsmaßnahmen eingeleitet werden, wenn sich das Kommunikationsgerät an einem unerwarteten Ort befindet.

US 2013/133052 A1 beschreibt ein System und ein Verfahren zur Authentisierung und Steuerung eines Computers mittels eines Fingerabdrucks.

WO 2015/030788 A1 beschreibt ein Verfahren zum Vergleichen einer aktuellen Position eines mobilen Kommunikationsgeräts mit bisher gespeicherten Positionen, wobei eine Authentisierung erforderlich ist, sobald eine Abweichung der aktuellen Position von den bisher gespeicherten Positionen erkannt wird.

US 2015/288688 A1 beschreibt ein Verfahren zur Authentisierung eines Nutzers eines mobilen Kommunikationsgeräts, insbesondere um das mobile Kommunikationsgerät dem Nutzer aufgrund von Sensordaten des mobilen Kommunikationsgeräts, z.B. Geräusche, Bilder, etc. zuzuordnen.

Die bekannten Verfahren sind entweder unsicher oder technisch aufwendig. Generell wird entweder auf eine Nutzereingabe abgestellt, welche per se unsicher ist oder es werden technische Vorrichtungen vorgehalten, welche die Authentisierung unterstützen sollen.

Somit ist es eine Aufgabe der vorliegenden Erfindung, ein Verfahren bzw. ein Authentisierungssystem bereitzustellen, welches es erlaubt, mit wenig technischem Aufwand eine möglichst zuverlässige und dennoch benutzerfreundliche Authentisierung durchzuführen. Es ist ferner eine Aufgabe der vorliegenden Erfindung ein Computerprogrammprodukt bereitzustellen, welches die Verfahrensschritte implementiert bzw. zum Betreiben des Authentisierungssystems geeignet ist.

Die Aufgabe wird gelöst mit den Merkmalen des unabhängigen Anspruchs.

Demgemäß wird ein Verfahren zum Authentifizieren eines tragbaren Endgeräts vorgeschlagen, welches den Schritt aufweist eines Abspeicherns von zeitversetzt gemessenen Ortsdaten eines tragbaren Endgeräts in dem tragbaren Endgerät und einer Authentifizierungsvorrichtung. Zeitversetzt bedeutet, dass innerhalb einer Zeitspanne mehrere Ortsdaten gemessen werden, wobei die einzelnen Ortsdaten zu jeweils unterschiedlichen Zeiten gemessen werden. Die Zeitspanne kann fest vorgegeben werden oder beliebig verändert werden, z.B. eine erste Zeitspanne ist länger als eine zweite Zeitspanne. Ferner erfolgt ein Extrahieren mindestens eines charakteristischen Merkmals aus den abgespeicherten Ortsdaten anhand einer bereitgestellten Extrahierungslogik sowie ein Authentifizieren des tragbaren Endgeräts durch die Authentifizierungsvorrichtung in Abhängigkeit eines Vergleichens des mindestens einen charakteristischen Merkmals mit unmittelbar vor dem Authentifizieren zeitversetzt gemessenen Ortsdaten des tragbaren Endgeräts.

Generell ist die vorliegende Terminologie derart zu verstehen, dass sich stets ein Benutzer, bzw. ein Client, bzgl. einer Authentifizierungsvorrichtung, beispielsweise einem Server, authentisiert. In der anderen Richtung, also beispielsweise vom Server zum Client erfolgt ein Authentifizieren. Beide Begriffe werden jedoch typischerweise nicht derart genau unterschieden und sollen dabei vorliegend auch austauschbar verwendet werden. Dem Fachmann erschließt sich hierbei der entsprechende Sinngehalt aus dem Kontext der bereitgestellten technischen Lehre. Somit kann das erfinderische Verfahren als ein Verfahren zum Authentifizieren bezeichnet werden, es kann jedoch auch als ein Verfahren zum Authentisieren bezeichnet werden. Dies spiegelt lediglich die jeweilige Sicht wieder und soll keinesfalls einschränkend verstanden werden.

Ein tragbares Endgerät kann hierbei jegliches Endgerät sein, welches mobil ist und dessen Ortsdaten bzw. Ortskoordinaten erfasst werden können. Dies können wohl mobile Funkgeräte, wie z.B. Smartphones oder aber auch Navigationsgeräte sein. Navigationsgeräte können hier tragbar sein, wobei tragbar auch derart verstanden werden soll, dass ein Navigationsgerät in einem Fahrzeug fest verbaut werden kann. Somit ist auch der Begriff des tragbaren Endgeräts nicht einschränkend zu verstehen, sondern vielmehr kann das Wort "tragbar" auch mit "mobil" ersetzt werden.

Auch muss der Aufenthalt des tragbaren Endgeräts nicht durch das Endgerät selbst bestimmt werden, sondern vielmehr sind auch weitere Vorrichtungen erfindungsgemäß vorgeschlagen, welche es ermöglichen, den Aufenthalt des jeweiligen Endgeräts zu messen. Hierbei erkennt der Fachmann gängige technische Umsetzungen, welche es ermöglichen, Ortsdaten eines mobilen Endgeräts zu identifizieren. Hierbei zählen beispielsweise GPS-Empfänger bzw. -Sender, RFID, WLAN-Parzellen oder gar optische Messsysteme. Somit sind dem Durchschnittsfachmann eine Reihe technischer Möglichkeiten bekannt, wie er Ortsdaten eines tragbaren Endgeräts messen kann.

Besonders vorteilhaft ist es die Ortsdaten zeitversetzt zu bestimmen derart, dass eine Bewegungstrajektorie gemessen wird. Somit liegen also mehrere Ortsdaten bzw. Ortskoordinaten vor, die jeweils oder in ihrer Gesamtschau eine Bewegung des tragbaren Endgeräts wiederspiegeln. Würde man beispielsweise die gemessenen Ortsdaten auf einer Landkarte eintragen, so entstünde ein Bewegungsprofil, welches es erlaubt, die jeweiligen Ortsdaten eines mobilen Endgeräts zu identifizieren. Ferner ist es möglich, aus den gemessenen Ortsdaten ein bestimmtes Verhalten des Nutzers bzw. seines Endgeräts zu erkennen.

Das vorliegende Verfahren ist generell gerichtet auf ein Authentifizieren des tragbaren Endgeräts, wobei jedoch typischerweise ein Authentifizieren des jeweiligen Nutzers erfindungsgemäß vorgeschlagen wird. Typischerweise erfolgt eine Zuordnung eines Endgeräts zu einem Nutzer derart, dass ein bestimmter Mensch typischerweise ein einzelnes mobiles Endgerät mit sich trägt. Da ein Mensch heutzutage typischerweise sein Handy stets mit sich führt, sind Rückschlüsse vom Aufenthaltsort des Handys auf die des Menschen durchführbar und somit kann der entsprechende Mensch indirekt authentifiziert werden.

In welchem Intervall die gemessenen Ortsdaten zeitversetzt erfasst werden, kann empirisch ermittelt werden bzw. vorab eingestellt werden. So ist es besonders vorteilhaft ein kurzes Zeitintervall zu spezifizieren, was in einer Vielzahl an Ortsdaten resultiert. Dies bedeutet jedoch einen größeren technischen Aufwand. Wird das Zeitintervall jedoch größer gesetzt, so sind lediglich weniger Ortsdaten vorhanden, das Verfahren kann jedoch hierbei energieeffizienter betrieben werden. Auch ist es möglich, das Intervall des zeitversetzten Ausmessens bzw. Abspeicherns zu variieren, wobei jedoch die Variation nachvollziehbar sein muss. Dies ist der Fall, da aus den abgespeicherten Ortsdaten ein charakteristisches Merkmal bzw. mehrere charakteristische Merkmale extrahiert werden.

Das Extrahieren mindestens eines charakteristischen Merkmals erfolgt derart, dass die Ortsdaten, ggf. mitsamt weiteren Daten, analysiert werden, und es werden bestimmte Bewegungstrajektorien identifiziert oder aber auch Positionsänderungen werden nachverfolgt. Typischerweise ähneln sich gewisse Wegabschnitte eines Menschen im Verlauf einer Woche. So fährt beispielsweise ein Mensch mitsamt seines mobilen Endgeräts stets morgens zu seiner Arbeitsstätte und kehrt abends zu seinem Wohnort zurück. Dies ist ein charakteristisches Merkmal, welches ihn von anderen Menschen unterscheidet. Jedoch hat dieser Mensch auch Kollegen, die ebenfalls zu dieser Arbeitsstätte fahren, jedoch an einem anderen Wohnort wohnen und dorthin stets zurückkehren. Somit ist auch der Wohnort ein charakteristisches Merkmal eines Menschen und somit eines tragbaren Endgeräts in Bezug auf dessen Ortsdaten. Hierbei ist es auch möglich, mehrere charakteristische Merkmale derart zu verknüpfen, dass ein einziges übergeordnetes charakteristisches Merkmal entsteht. Beispielsweise kann der Wohnort mit der Arbeitsstätte verknüpft werden. Da typischerweise keine Menschen am gleichen Wohnort wohnen und ebenso zur gleichen Arbeitsstätte fahren, können diese beiden Merkmale als ein charakteristisches Merkmal abgespeichert werden.

Ferner ist es möglich, dass bestimmte Aufenthaltsorte an einem Wochenende identifiziert werden. Auch können Aufenthaltsdauer oder Fortbewegungsgeschwindigkeit als charakteristische Merkmale berücksichtigt werden. Hierbei kommen generell alle charakteristischen Merkmale eines Bewegungsprofils eines mobilen Endgeräts bzw. eines Benutzers in Betracht.

Um ein Regelwerk bereitzustellen, wie genau die charakteristischen Merkmale aus den gemessenen Ortsdaten zu extrahieren sind, wird eine Extrahierungslogik bereitgestellt. Diese Extrahierungslogik weist Befehle auf, die bestimmte Regeln definieren, welche anhand der gemessenen Ortsdaten Charakteristika ermitteln, die typischerweise genau einem mobilen Endgerät bzw. einem Endgerätbenutzer zuzuordnen sind. Somit entstehen also eindeutige Merkmale des Bewegungsprofils des mobilen Endgeräts.

Erfindungsgemäß sollen also diese charakteristischen Merkmale auch zur Authentifizierung bzw. Authentisierung des tragbaren Endgeräts herangezogen werden. Hierbei wird davon ausgegangen, dass jeder Nutzer genau ein Bewegungsprofil im Laufe eines bestimmten Zeitraums aufweist. Erfindungsgemäß kann direkt auf die gemessenen Ortsdaten zurückgegriffen werden oder es können charakteristische Merkmale abstrahiert bzw. extrahiert werden. Somit ist es erfindungsgemäß besonders vorteilhaft, dass nicht auf der gesamten Datenbasis operiert werden muss, sondern dass lediglich einzelne Merkmale identifiziert und weiterverarbeitet werden können.

Die jeweilige Extrahierungslogik kann beispielsweise mittels eines Datenspeichers bereitgestellt werden. Hierbei ist es möglich, dass die Extrahierungslogik lediglich auf dem Authentifizierungsserver bzw. auf der Authentifizierungsrichtung abgespeichert ist. Analog ist es vorteilhaft, die Extrahierungslogik auch dem mobilen Endgerät bereitzustellen. Hierbei ist es generell ausreichend, die Extrahierungslogik auf dem Authentisierungsserver bzw. der Authentisierungsvorrichtung abzuspeichern, da hierdurch der Server, welcher typischerweise mit mehr Hardware-Kapazitäten ausgestattet ist, als das mobile Endgerät, die Extraktionsalgorithmen ausführen kann. Außerdem ist das Verfahren besonders fälschungssicher, falls die charakteristischen Merkmale lediglich auf der Authentifizierungsvorrichtung hinterlegt sind.

Sind nunmehr die entsprechenden charakteristischen Merkmale des tragbaren Endgeräts ermittelt, so erfolgt ein Messen bzw. ein Zugreifen auf gemessene Ortsdaten. Hierbei wird davon ausgegangen, dass falls ein mobiles Endgerät gestohlen wird, sich der Dieb in anderen Orten aufhält, als es typischerweise der rechtmäßige Eigentümer tut. Wird also ein Handy gestohlen, so entfernt sich der Dieb typischerweise vom Ort und kehrt nach gewisser Zeit in seinen normalen Alltag zurück. Der normale Alltag des Diebs sieht jedoch andere Aufenthaltsorte vor als die des rechtmäßigen Besitzers. Somit erfolgt eine starke Abweichung der gemessenen Ortsdaten von den Ortsdaten, die bereits abgespeichert sind. Somit ist es erfindungsgemäß besonders vorteilhaft lediglich diejenigen zeitversetzt gemessenen Ortsdaten bei der Authentifizierung zu berücksichtigen, die unmittelbar vor dem Authentifizieren gemessen wurden. Somit wird verhindert, dass die von einem Betrüger erzeugten Ortsdaten als Ortsdaten des rechtmäßigen Eigentümers verstanden werden. Auch ermöglicht es ein Berücksichtigen von unmittelbar vor dem Authentifizieren gemessenen Ortsdaten zu erkennen, dass hier eine besonders große Abweichung von den in der Vergangenheit typischerweise gemessenen Ortsdaten erfolgt.

Erfindungsgemäß erfolgt nunmehr ein Vergleichen des mindestens einen charakteristischen Merkmals mit unmittelbar vor dem Authentifizieren zeitversetzt gemessenen Ortsdaten des tragbaren Endgeräts. Somit lässt sich erkennen, ob die zuletzt gemessenen Daten tatsächlich dem typischen Verhalten, also den charakteristischen Merkmalen, des rechtmäßigen Besitzers des Endgeräts entsprechen. Wird ein mobiles Endgerät schnell von einem Tatort entfernt und beispielsweise über eine Online-Plattform verkauft, so weichen die unmittelbar vor dem Authentifizieren gemessenen Ortsdaten erheblich von den abgespeicherten zeitversetzt gemessenen Ortsdaten ab. Erwirbt nunmehr ein Kunde das entwendete Endgerät so wird bei einem Vergleichen festgestellt, dass die aktuell gemessenen Ortsdaten erheblich von den typischerweise gemessenen Ortsdaten abweichen. Da somit das Vergleichen negativ ausfällt, fällt auch die Authentifizierung negativ aus. Bei einem positiven Vergleichsergebnis kann auch die Authentifizierung positiv erfolgen. Hierbei ist ein Vergleichen derart zu verstehen, dass nicht eine totale Gleichheit vorliegen muss, sondern die charakteristischen Merkmale müssen im Wesentlichen mit den Ortsdaten, welche unmittelbar vor dem Authentifizieren erzeugt werden, übereinstimmen. Dies ermöglicht es, einzustellen, in welchem Rahmen Abweichungen im Bewegungsprofil derart toleriert werden, dass das gemessene Bewegungsprofil noch immer dem rechtmäßigen Benutzer zugeordnet werden kann.

Somit erfolgt ein Authentifizieren in Abhängigkeit des Vergleichsergebnisses. Da vor einem Authentifizieren stets charakteristische Merkmale des tragbaren Endgeräts bzw. dessen Positionen bekannt sind, kann unmittelbar vor dem Authentifizieren ein weiteres Messen von Ortsdaten erfolgen, die dann Aufschluss darüber geben, ob die charakteristischen Merkmale vorhanden sind oder aber unerwartete Ortsdaten vorliegen. Bei unerwarteten Ortsdaten kann davon ausgegangen werden, dass ein Besitzerwechsel, egal ob rechtmäßig oder nicht, stattgefunden hat. Somit ist es erfindungsgemäß vorteilhaft, dass es bei einem solchen Ortswechsel bzw. Bewegungsprofilwechsel eine Authentifizierung nicht mehr möglich ist.

In diesem Fall wird ein neues Bewegungsprofil erstellt bzw. es werden zeitversetzt erneut Ortsdaten gemessen und diese können nach einem voreingestellten Zeitraum als charakterisierende Merkmale bei einer weiteren Authentifizierung verwendet werden.

Somit ist es erfindungsgemäß besonders vorteilhaft, dass ein Authentifizieren anhand eindeutiger Merkmale, nämlich der charakteristischen Merkmale derart stattfindet, dass der Benutzer keine spezifische Benutzereingabe aktiv bereitstellen muss. Er stellt seine Benutzereingabe passiv dadurch bereit, dass er mittels seines tragbaren Endgeräts ein Bewegungsprofil erzeugt. Bewegungsprofile sind hierbei typischerweise eindeutig, da jeder Mensch sich an unterschiedlichen Orten zu unterschiedlichen Zeiten aufhält. Auch ist es besonders vorteilhaft, dass kleinere Abweichungen in den gemessenen Ortsdaten ignoriert werden können derart, dass sich auch in abgegrenztem Umfang das Bewegungsprofil des Benutzers ändern kann und er noch immer positiv mittels der gemessenen Ortsarten authentifiziert werden kann. Weicht jedoch das Bewegungsprofil des Benutzers zu stark von den zu erwartenden Ortsdaten ab, so erfolgt ein negatives Vergleichen und somit auch eine negative Authentifizierung.

Gemäß einem Aspekt der vorliegenden Erfindung wird mitsamt den zeitversetzt gemessenen Ortsdaten eine Zeitinformation, eine Funkzellenidentifikation, eine Router-Information, eine Access-Point-Identifikation, eine GPS-Koordinate, eine Temperatur, eine Lage, eine Beschleunigung, eine Senderfeldstärke, eine Helligkeit, eine Lautstärke, ein Kamerabild, ein Hashwert, ein Hashwert eines Kamerabildes und/ oder Benutzerinformation abgespeichert. Dies hat den Vorteil, dass bei der Authentifizierung bzw. bei dem Vergleichen der charakteristischen Merkmale auch eine Vielzahl weiterer Information bzgl. des tragbaren Endgeräts berücksichtigt werden kann. So erfolgt nicht lediglich ein Abspeichern von zeitversetzt gemessenen Ortsdaten, sondern eben auch der weiteren vorgeschlagenen Werte. Diese weiteren vorgeschlagenen Merkmale können in die Erstellung des charakteristischen Merkmals einfließen. Diese Merkmale können auch in die Extrahierungslogik derart einfließen, dass diese so verknüpft werden, dass charakteristische Merkmale erzeugt werden. Somit kann auch ein Vergleichen der vorgeschlagenen weiteren Parameter mit unmittelbar vor dem Identifizieren zeitversetzt gemessenen weiteren Parametern erfolgen. So lassen sich anhand der vorgeschlagenen Parameter umfangreiche Bewegungsprofile bzw. generell Profile des tragbaren Endgeräts erstellen. Diese Profile geben jeweils Rückschlüsse auf den entsprechenden Nutzer und machen sein Profil einzigartig. Diese Einzigartigkeit wird in den charakteristischen Merkmalen berücksichtigt, derart, dass anhand des Benutzerprofils festgestellt werden kann, ob es sich tatsächlich um den vorgegebenen Nutzer bzw. das vorgegebene tragbare Endgerät handelt. Somit kann ein Authentifizieren auf der Basis einer Vielzahl von Parametern erfindungsgemäß durchgeführt werden.

Gemäß einem weiteren Aspekt der vorliegenden Erfindung erfolgen das Extrahieren des charakteristischen Merkmals und das Authentifizieren in Abhängigkeit einer Auswahl aller während eines Verfahrensschrittes abgespeicherten Daten. Dies hat den Vorteil, dass alle vorgeschlagenen Parameter erfindungsgemäß in jedem der Verfahrensschritte berücksichtigt werden können. Insbesondere ist es vorteilhaft, die aufgeführten Parameter untereinander derart zu kombinieren, dass charakteristische Merkmale identifizierbar sind. Hierbei erkennt der Durchschnittsfachmann vorteilhafte Kombinationen, wobei generell jegliche Kombinationsmöglichkeiten denkbar sind.

Gemäß einem weiteren Aspekt der vorliegenden Erfindung wird die Menge der zu messenden Daten vorab eingestellt. Dies hat den Vorteil, dass sowohl das Messintervall als auch die Messdauer eingestellt werden kann. Somit ist es möglich beispielsweise gemessene Ortsdaten innerhalb von einem Jahr zu berücksichtigen. Auch kann festgestellt werden, dass es lediglich sinnvoll ist, Daten, welche unmittelbar vor dem Authentifizieren gemessen werden von lediglich sieben Tagen zu berücksichtigen. Somit ist es auch möglich, nicht benötigte gemessene Daten wieder zu verwerfen. Auch kann auf die Stufe der Sicherheitsanforderungen bzgl. des Authentifizierens abgestellt werden. So können mehrere Daten gesammelt werden, falls eine besonders hohe Sicherheitsstufe erreicht werden soll. Somit ist das entsprechende Benutzerprofil feingranular und ermöglicht dementsprechend auch spezifischere charakteristische Merkmale. Erfolgt jedoch lediglich ein Authentifizieren gemäß einer niedrigen Sicherheitsstufe, so können auch grobgranulare Benutzerdaten herangezogen werden.

Gemäß einem weiteren Aspekt der vorliegenden Erfindung werden die gemessenen Ortsdaten als relative Ortsdaten abgespeichert. Dies hat den Vorteil, dass keine absoluten Ortsdaten abgespeichert werden, welche Rückschlüsse auf eine Person zulassen würden. Die relativen Ortsdaten dienen somit lediglich als Fingerabdruck, also als charakteristisches Merkmal. Diese sollen nicht zwingendermaßen Rückschlüsse auf konkrete Örtlichkeiten geben. Somit können erfindungsgemäß lediglich Positionsänderungen abgespeichert und im vorgeschlagenen Verfahren verwendet werden.

Gemäß einem weiteren Aspekt der vorliegenden Erfindung weist die Extrahierungslogik einen Hinweis auf statische Kenngrößen auf. Dies hat den Vorteil, dass gewisse empirisch ermittelte Daten vorgegeben werden können, bzw. auch zur Laufzeit ermittelt werden können und die Extrahierungslogik hierauf basierend ein charakteristisches Merkmal oder mehrere charakteristische Merkmale erstellen kann. So unterscheiden sich typischerweise die Kenngrößen von unterschiedlichen Bevölkerungsgruppen, was auch in die Authentifizierung einfließen kann.

Gemäß einem weiteren Aspekt der vorliegenden Erfindung sieht die Extrahierungslogik eine Clusterbildung, eine Ermittlung von Häufigkeiten, eine Ermittlung eines Mittelwerts, eine Berechnung einer Standardabweichung, eine Ermittlung von Fourier-Komponenten, eine Zuordnung von Parametern und/oder eine Korrelierung von Parametern vor. Dies hat den Vorteil, dass die Extrahierungslogik auf bekannte mathematische Verfahren zurückgreifen kann und dies derart vorteilhaft einsetzen kann, dass charakteristische Merkmale extrahierbar sind. Beispielsweise können die gemessenen Ortsdaten derart klassifiziert werden, dass diese ein eindeutiges charakteristisches Merkmal ergeben. Ferner ist es erfindungsgemäß besonders vorteilhaft, die Extrahierungslogik derart zu wählen, dass die Datensätze, welche verarbeitet werden müssen, reduziert werden können. Somit verbleiben nicht die komplette Datenbasis, sondern eben lediglich die charakteristischen Merkmale, welche einen niedrigeren Datenumfang als die gesamte Datenbasis haben. So sind beispielsweise bei einem Cluster nicht alle Daten die gemessen worden sind zu speichern, sondern lediglich besonders charakteristische Daten. Entsprechend verhält es sich bei den anderen vorgeschlagenen Verfahren, wobei beispielsweise ein Mittelwert erreicht, dass die weiteren gemessenen Daten nicht mehr berücksichtigt werden müssen. Die Wahl der Extrahierungslogik kann beispielsweise auch in Abhängigkeit der zu wählenden Sicherheitsstufe erfolgen, da die unterschiedlich vorgeschlagenen Extrahierungslogiken unterschiedlich zuverlässig arbeiten. Wird wie bereits beschrieben, lediglich ein Mittelwert berücksichtigt, so kann dieser Mittelwert durch eine Vielzahl unterschiedlicher Parameter, welche sich im Mittelwert zufällig ähneln, nachgebildet werden.

Gemäß einem weiteren Aspekt der vorliegenden Erfindung werden Ortsdaten lediglich innerhalb eines vorbestimmten Zeitfensters gemessen. Dies hat den Vorteil, dass ein konkretes Intervall vorab anzugeben ist, welches dann bestimmt, wie viele Ortsdaten in welchem Zeitraum zu sammeln sind.

Gemäß einem weiteren Aspekt der vorliegenden Erfindung ist das Zeitfenster relativ. Dies hat den Vorteil, dass ein so genanntes wanderndes Zeitfensters implementiert werden kann und somit die Datenbasis auf einem konstanten Umfang gehalten werden kann. So wandert das Zeitfenster mit dem aktuellen Datum mit und kann beispielsweise bestimmen, dass lediglich Daten innerhalb eines Zeitfensters von einem Jahr zu berücksichtigen sind. Insbesondere können hiermit Datenschutzregeln implementiert werden. Auch kann dieses relative Zeitfenster bestimmen, wie groß das Zeitfenster ist, welches unmittelbar vor dem Authentifizieren bzgl. zeitversetzt gemessener Ortsdaten zu berücksichtigen ist. Bereits gemessene Ortsdaten außerhalb des Zeitfensters können dann verworfen werden.

Gemäß einem weiteren Aspekt der vorliegenden Erfindung wird das Extrahieren mindestens eines charakteristischen Merkmals derart iterativ ausgeführt, dass das mindestens eine charakteristische Merkmal stets angepasst wird. Dies hat den Vorteil, dass zur Laufzeit eine dynamische Wahl des charakteristischen Merkmals durchgeführt werden kann und auf eventuelle Profiländerungen des Benutzers eingegangen werden kann.

Gemäß einem weiteren Aspekt der vorliegenden Erfindung wird ein Schwellwert bereitgestellt, der beschreibt, ob das mindestens eine charakteristische Merkmal mit den unmittelbar vor dem Authentifizieren zeitversetzt gemessenen Ortsdaten übereinstimmt. Dies hat den Vorteil, dass Abweichungen im Bewegungsprofil toleriert werden können, und dass beispielsweise eine Prozentangabe bereitgestellt werden kann, zu der die bereits abgespeicherten gemessenen Ortsdaten mit aktuell gemessenen Ortsdaten übereinstimmen müssen, um ein positives Vergleichen und somit ein positives Authentifizieren durchzuführen.

Gemäß einem weiteren Aspekt der vorliegenden Erfindung werden Ortsdaten zumindest teilweise extrapoliert. Dies hat den Vorteil, dass auch Ortsdaten berücksichtigt werden können, die noch nicht gemessen wurden, aber die gemäß mathematischen Vorhersagen zu erwarten sind. Hierbei sind dem Fachmann diverse mathematische Verfahren bekannt, welche zur Extrapolation bzw. einer Vorhersage von Daten Verwendung finden können.

Gemäß einem weiteren Aspekt der vorliegenden Erfindung wird das Vergleichen von der Authentifizierungsvorrichtung durchgeführt. Dies hat den Vorteil, dass das tragbare Endgerät hierzu nicht herangezogen wird, was in einer höheren Sicherheit mündet. Dies ist der Fall, da sich das Endgerät authentisieren soll und somit Manipulationen auf dem Endgerät vorgenommen werden können. Erfindungsgemäß, wird somit das Vergleichen bzw. das Authentifizieren lediglich auf der Authentifizierungsvorrichtung durchgeführt, welche besonders gesichert sein kann.

Ferner wird ein Authentifizierungssystem vorgeschlagen mit einer Speichervorrichtung, welche eingerichtet ist zum Abspeichern von zeitversetzt gemessenen Ortsdaten eines tragbaren Endgeräts in dem tragbaren Endgerät und einer Authentifizierungsvorrichtung. Besonders vorteilhaft ist es, dass die Speichervorrichtung zwei Speichereinheiten oder mehr aufweist, wobei mindestens eine Speichereinheit in dem tragbaren Endgerät angeordnet ist und eine weitere Speichereinheit in der Authentifizierungsvorrichtung. Das Authentifizierungssystem umfasst ferner eine Extrahierungsvorrichtung, eingerichtet zum Extrahieren mindestens eines charakteristischen Merkmals aus den abgespeicherten Ortsdaten anhand einer bereit gestellten Extrahierungslogik. Ferner ist eine Authentifizierungsvorrichtung vorgesehen, welche eingerichtet ist zum Authentifizieren des tragbaren Endgeräts durch die Authentifizierungsvorrichtung in Abhängigkeit eines Vergleichens des mindestens einen charakteristischen Merkmals mit unmittelbar vor dem Authentifizieren zeitversetzt gemessenen Ortsdaten des tragbaren Endgeräts.

Ferner wird die Aufgabe gelöst durch ein Computerprogrammprodukt mit Steuerbefehlen, welche das vorgeschlagene Verfahren implementieren. Hierbei ist es besonders vorteilhaft, dass das Verfahren eingerichtet ist zum Betreiben des Authentifizierungssystems und dass eben dieses Authentifizierungssystem strukturelle Merkmale aufweist, welche die jeweiligen Verfahrensschritte implementieren. Somit ist es möglich, die Merkmale des Verfahrens auf die strukturellen Merkmale des Authentifizierungssystems anzuwenden und ebenso die strukturellen Ausgestaltungen des Authentifizierungssystems auf das Verfahren anzuwenden.

Weitere vorteilhafte Ausgestaltungen werden anhand der beigefügten Figuren erläutert. Es zeigt:
- Figur 1:: ein schematisches Ablaufdiagramm eines Aspekts des erfindungsgemäßen Verfahrens zum Authentifizieren;
- Figur 2:: ein schematisches Blockschaltbild eines Aspekts des erfindungsgemäßen Authentifizierungssystems;
- Figur 3:: abgespeicherte Ortsdaten gemäß einem Aspekt der vorliegenden Erfindung; und
- Figur 4:: abgespeicherte Ortsdaten mitsamt charakteristischen Merkmalen gemäß einem Aspekt der vorliegenden Erfindung.

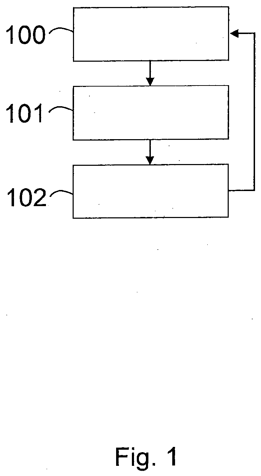

Figur 1 zeigt ein Verfahren zum Authentifizieren, bei dem in einem ersten Verfahrensschritt 100 ein Abspeichern von zeitversetzt gemessenen Ortsdaten erfolgt. In einem darauf folgenden Verfahrensschritt 101 erfolgt ein Extrahieren mindestens eines charakteristischen Merkmals aus den abgespeicherten Ortsdaten. Letztendlich erfolgt ein Authentifizieren 102 des tragbaren Endgeräts durch die Authentifizierungsvorrichtung in Abhängigkeit eines Vergleichens. Hierbei ist es vorteilhaft weitere Verfahrensschritte vorzusehen, welche beispielsweise das Extrahieren des charakteristischen Merkmals implementieren bzw. noch weitere Verfahrensschritte, welche das Vergleichen der charakteristischen Merkmale mit gemessenen Ortsdaten implementieren.

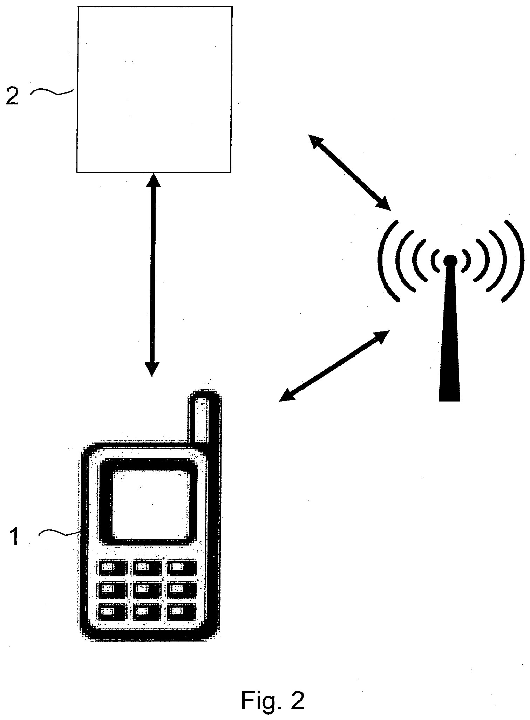

Figur 2 zeigt gemäß einem Aspekt der vorliegenden Erfindung ein Mobiltelefon 1, welches sensible Daten von einem Server 2 abrufen will. Dies ist durch den bidirektionalen Pfeil gekennzeichnet, der eine Anfrage von dem Mobilgerät 1 zu dem Server 2 darstellt und in der anderen Richtung eine Authentifizierung des mobilen Endgeräts 1. Typischerweise erfolgt dies unter Verwendung von weiteren Komponenten, beispielsweise einem Mobilfunkmasten mit dazu gehörigen netzwerktypischen Komponenten, welche eine Kommunikation zwischen dem mobilen Endgerät 1 und dem Server 2 ermöglichen. Beispielsweise können die Ortsdaten anhand eines Abstands zu dem Mobilfunkmasten und dem Handy 1 ermittelt werden. Hierzu kann beispielsweise eine Signalstärke gemessen werden oder es kann aber auch ein Signal übermittelt werden und dessen Laufzeit gemessen werden. Dem Fachmann sind hierbei weitere netzwerktypische Parameter bekannt, welche es ermöglichen, den Standort eines Mobiltelefons zu orten. Insbesondere sind weitere Komponenten notwendig, um das erfindungsgemäße Authentifizierungssystem zu implementieren, welche vorliegend nicht gezeigt sind.

Die gespeicherten Ortsdaten können in ihrer Gesamtheit auch als "Location History" bezeichnet werden. Ferner ist es jedoch möglich, weitere Daten zu berücksichtigen, wie es im Folgenden beschrieben wird.

Die Location History sind Daten, die für eine Reihe von Zeitpunkten z.B. jeweils zwei Koordinaten abspeichern wie etwa geographische Länge und Breite. Die zugehörige Zeitangabe kann auch gemäß einem Aspekt der vorliegenden Erfindung Informationen über die jeweilige Zeitzone und Sommerzeit-Verschiebung enthalten, damit wird jeder Location History-Eintrag eindeutig. Die Abfolge der Einträge, d.h. die Location History als ganzes oder in signifikanten Ausschnitten, stellt eine Art Fingerabdruck und eine physical uncloneable Function dar und kann gemäß einem Aspekt der vorliegenden Erfindung zur Identifizierung genutzt werden. Die Nutzung ist in Richtung verschiedener Anwendungen möglich, die im Folgenden im Detail dargestellt werden.

Location History Daten liegen heute bereits für mobile Clients vor. Bei Mobilfunkbetreibern erfolgt dies zumindest über die Ortsangabe der jeweiligen Funkzelle. Eine Suchmaschine speichert Ortsinformation von Android-Clients, wenn der Benutzer angemeldet ist. Dabei wird die Liste der jeweils verfügbaren Access-Points ausgewertet oder wenn verfügbar die ermittelten GPS Koordinaten.

Die Location History Daten liegen zuerst einmal beim Dienstanbieter vor und sind wie oben dargestellt einzigartig für das jeweilige Geräte, wenn sie über ausreichend lange Zeiträume genommen werden, typischerweise ein Jahr. Aus einem genügend langen Teilabschnitt dieser Daten, die etwa parallel auch auf dem mobilen Endgerät durch eine App vorgehalten werden, kann gemäß einem Aspekt der vorliegenden Erfindung die Identität des Gerätes bestimmt werden. Das Gerät kann auf Anforderung einen Abschnitt aus der aufgezeichneten Location History zur Authentisierung präsentieren.

Die Location History kann gemäß einem Aspekt der vorliegenden Erfindung um weitere physikalische Daten wie Temperatur, Lage, Beschleunigung, Senderfeldstärke, Helligkeit, Lautstärke bis hin zu Ausschnitten oder Hashwerten des Kamerabildes angereichert werden. Damit wird quasi ein multidimensionaler Konfigurationsraum aufgespannt, der eine verbesserte Trennung und effizientere Verifizierung von Identitäten erlaubt.

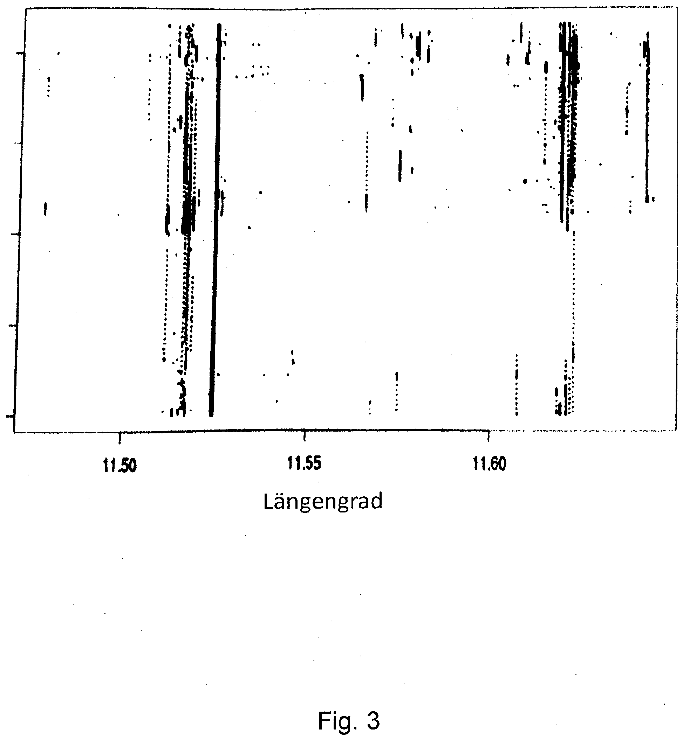

Figur 3 zeigt den digitalen Fingerabdruck eines Mobilphones über ca. ein Jahr, erzeugt aus Daten der zugänglichen Suchmaschinen-Datenbank (KML Format). Die Datenpunkte von Tageszeitpunkt (in Sekunden) und geografischer Länge des Aufenthaltsortes wurden zuerst geplottet und entsprechen dem Zeitraum eines Jahres. Einige der Daten wurden nachträglich über die Punkte geplottet, verdecken diese also ggf. Sie entsprechend den Aufenthaltsorten jeweils am Dienstag bzw. am Mittwoch.

Figur 3 zeigt ein 2d-Plot der Tageszeit (vertikal in Sekunden) und des zugehörigen Wertes der geografischen Länge des Aufenthaltsortes.

Um etwa für einen Dienstanbieter, der dieses Verfahren ebenfalls nutzen möchte (Beispiel Autovermietung oder Carsharing), die Positionsinformation zu verbergen, können ihm durch einen mobilen Client lediglich Positionsänderungen statt der absoluten Koordinaten gemäß einem Aspekt der vorliegenden Erfindung geliefert werden. Durch die raumzeitliche Signatur bleibt dabei der Charakter einer physical uncloneable Function erhalten.

Im Übrigen kann die Location History bei einem Dienstanbieter wenn erforderlich auch anonym geführt werden. Mit dem serverseitig abgelegten Datensatz werden dann keinerlei personenbeziehbare Daten abgespeichert. Ein von einem Client gelieferter Ausschnitt der Location History wird dann in der Vielzahl der hinterlegten Profile identisch gesucht. Hierfür kommt vorteilhaft z.B. der MapReduce Algorithmus auf einer verteilten Datenbankarchitektur zum Einsatz. Die pure Existenz des charakteristischen Musters in der großen Menge von Daten beweist die Authentizität der Daten, jedoch a priori nicht die des Gerätes, wegen möglichen Datendiebstahls, oder des Nutzers, wegen möglichen Gerätediebstahls. Verwendbar ist das Verfahren daher bevorzugt z.B. für den Lizenznachweis oder Tote-Mann-Szenarien, also bzgl. der Verfügbarkeit eines authentischen Devices oder einer authentischen Funktion. Hierfür kann gemäß einem Aspekt der vorliegenden Erfindung eine jeweils aktualisierte Location History in Ausschnitten in die jeweiligen Versionen von Whitebox Kryptoalgorithmen und Obfuscationsdaten hineingerechnet werden.

Im Folgenden werden statistische Kenngrößen und antizipierte Authentizität beschrieben. Das bisher beschriebene Verfahren nutzt die zu Grunde liegende physikalische Eigenschaft gar nicht aus, es könnte auch durch periodisches Generieren von Zufallszahlen ersetzt werden.

Daher werden gemäß einem Aspekt der vorliegenden Erfindung aus den Daten der Location History charakteristische statistische Kenngrößen gewonnen. Beispiele hierfür sind Clusterbildung und daraus Ermittlung von Häufigkeitspunkten, Mittelwerte und Standardabweichungen der Orts-, Zeit- und Geschwindigkeitsdaten (Bewegungsdaten) ferner Fourierkomponenten der Zeitreihen für typische wiederkehrende Abläufe. Dabei werden immer möglichst mehrere Parameter bestimmt und damit eine Gesamtbewertung vorgenommen.

Für die Identifizierung würden im mobilen Client über einen ausreichend signifikanten Zeitraum (> 7 Tage) ein rollierender Datenpuffer befüllt und diese Daten auf der Basis statistischer Modelle (Stichprobenalgorithmen wie Fisher, Student, etc.) mit den charakteristischen Kenngrößen der Location History verglichen. Die statistischen Methoden liefern neben einer Fit- / Unfit-Aussage auch Confidence Level der Aussage, die eine quantitative Bewertung der Zuverlässigkeit der Aussage darstellt, was bei der Zuweisung von Rechten berücksichtigt werden kann.

Die im zentralen Server hinterlegte Location History wird mit fortschreitender Nutzung des Service gemäß einem Aspekt der vorliegenden Erfindung fortgeschrieben und damit auch um inkrementelle Änderungen der charakteristischen Größen ergänzt oder erweitert. Hierbei wird das zu Grunde liegende Modell des jeweiligen Algorithmus (Clusterstruktur, Support Vector Machine, Neuronales Netz, Decision Tree) laufend an die Realität angepasst. Plötzlich große Änderungen (z.B. Umzug und Wechsel des Arbeitgebers) führen dagegen zwangsläufig zum Verfall der Identität.

Aus dem bisherigen raumzeitlichen Verhalten des Nutzers wird so ein zukünftiges Muster extrapoliert und antizipiert. Ein Diebstahl des Geräts oder des Location-History-Datensatzes würde in kurzer Zeit zu einer signifikanten Abweichung von den charakteristischen Kenngrößen führen.

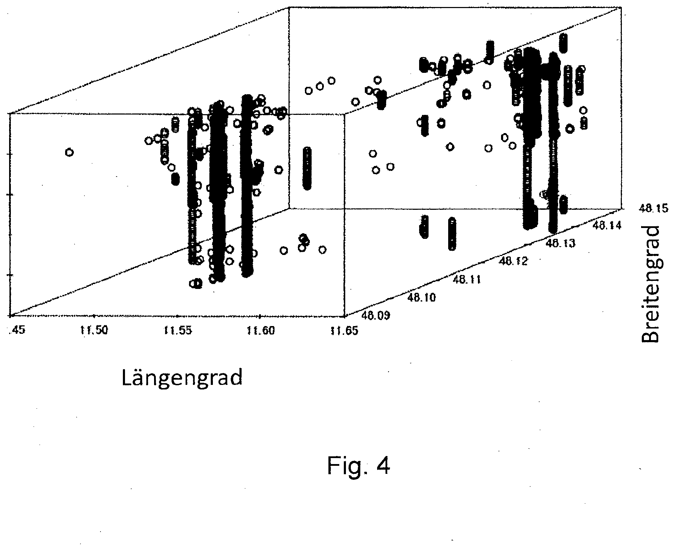

Figur 4 zeigt eine graphische Darstellung von gemessenen Kenngrößen, in denen bereits charakteristische Merkmale identifiziert wurden.

Zusammenfassend sei festgestellt, dass lediglich gemäß einem Aspekt der vorliegenden Erfindung auf dem Client, z.B. dem Smartphone und dem Server ständig Daten zur Location History LH des Clients gesammelt werden, bestehend aus einer Folge von Daten zu Ort und Zeit des Clients. Die Location History weist für jeden Client ein charakteristisches Muster auf. Zur Prüfung der Authentizität der Location History des Clients reicht gemäß einem Aspekt der vorliegenden Erfindung die Existenz des charakteristischen Musters in der Location History des Servers aus oder aber auch signifikante Teile davon. Zusätzlich werden gemäß einem Aspekt der vorliegenden Erfindung aus den jüngsten Daten der Location History des Clients charakteristische statistische Kenngrößen bestimmt, wobei zur Identifizierung des Clients die charakteristischen statistischen Kenngrößen mit dem charakteristischen Muster des Servers verglichen werden.

Erfindungsgemäß erfolgt somit eine einfache, optional anonyme Identifizierung und Authentisierung mittels des charakteristischen Musters und der charakteristischen statistischen Kenngrößen ohne eine aktive Nutzereingabe.

Hierbei ist es besonders vorteilhaft, dass nach einem Diebstahl des Clients oder der Location History in kurzer Zeit eine deutliche Abweichung vom charakteristischen Muster des Servers und damit zur Sperrung zumindest von Teilen des Clients erfolgen würde.

## Patentansprüche

1. Verfahren zum Authentifizieren eines tragbaren Endgeräts (1) gegenüber einer Authentifizierungsvorrichtung, um eine vorgegebene Identität des Endgeräts (1) zu überprüfen, mit den Schritten:
- Abspeichern (100) von zeitversetzt gemessenen Ortsdaten des tragbaren Endgeräts (1) in dem tragbaren Endgerät und einer Authentifizierungsvorrichtung (2), wobei die Ortsdaten in ihrer Gesamtschau eine Bewegung des tragbaren Endgeräts (1) wiederspiegeln, so dass ein Bewegungsprofil des Endgeräts (1) entsteht;
- Extrahieren (101) mindestens eines charakteristischen Merkmals aus den abgespeicherten Ortsdaten anhand einer bereitgestellten Extrahierungslogik, wobei die abgespeicherten Ortsdaten analysiert werden und Bewegungstrajektorien des Endgeräts (1) identifiziert werden, wobei das mindestens eine charakteristische Merkmal dem Endgerät (1) zuzuordnen ist, um das mindestens eine charakteristische Merkmal zur Authentisierung des Endgeräts (1) zu verwenden, so dass zur Authentisierung nicht alle abgespeicherten Ortsdaten verwendet werden, sondern nur mindestens ein charakteristisches Merkmal; und
- Authentifizieren (102) des tragbaren Endgeräts (1) durch die Authentifizierungsvorrichtung (2) in Abhängigkeit eines Vergleichens des mindestens einen charakteristischen Merkmals mit unmittelbar vor dem Authentifizieren zeitversetzt gemessenen Ortsdaten des tragbaren Endgeräts (1),
wobei das Extrahieren (101) des charakteristischen Merkmals und das Authentifizieren in Abhängigkeit einer Auswahl aller während eines Verfahrensschrittes abgespeicherten Daten erfolgen,
wobei die Menge der zu messenden Daten vorab eingestellt wird,
wobei das Extrahieren (101) mindestens eines charakteristischen Merkmals derart iterativ erfolgt, dass das mindestens eine charakteristische Merkmal stets angepasst wird,
wobei Ortsdaten lediglich innerhalb eines vorbestimmten Zeitfensters gemessen werden und das Zeitfenster relativ ist.

2. Verfahren nach Anspruch 1, **dadurch gekennzeichnet, dass** mitsamt den zeitversetzt gemessenen Ortsdaten eine Zeitinformation, eine Funkzellenidentifikation, eine Routerinformation, eine Access-Point-Identifikation, eine GPS-Koordinate, eine Temperatur, eine Lage, eine Beschleunigung, eine Senderfeldstärke, eine Helligkeit, eine Lautstärke, ein Kamerabild, ein Hashwert, ein Hashwert eines Kamerabildes und/ oder Benutzerinformation abgespeichert wird.

3. Verfahren nach einem der vorhergehenden Ansprüche, **dadurch**
**gekennzeichnet, dass** die gemessenen Ortsdaten als relative Ortsdaten abgespeichert werden.

4. Verfahren nach einem der vorhergehenden Ansprüche, **dadurch**
**gekennzeichnet, dass** die Extrahierungslogik einen Hinweis auf statistische Kenngrößen aufweist.

5. Verfahren nach einem der vorhergehenden Ansprüche, **dadurch**
**gekennzeichnet, dass** die Extrahierungslogik eine Clusterbildung, eine Ermittlung von Häufigkeiten, eine Ermittlung eines Mittelwerts, eine Berechnung einer Standardabweichung, eine Ermittlung von Fourier-Komponenten, eine Zuordnung von Parametern und/ oder eine Korrelierung von Parametern vorsieht.

6. Verfahren nach einem der vorhergehenden Ansprüche, **dadurch**
**gekennzeichnet, dass** ein Schwellwert bereitgestellt wird, der beschreibt, ob das mindestens eine charakteristische Merkmal mit den unmittelbar vor dem Authentifizieren zeitversetzt gemessenen Ortsdaten übereinstimmt.

7. Verfahren nach einem der vorhergehenden Ansprüche, **dadurch**
**gekennzeichnet, dass** Ortsdaten zumindest teilweise extrapoliert werden.

8. Verfahren nach einem der vorhergehenden Ansprüche, **dadurch**
**gekennzeichnet, dass** das Vergleichen von der Authentifizierungsvorrichtung (2) durchgeführt wird.

## Claims

1. Method for authenticating a portable terminal device (1) vis-à-vis an authentication device in order to verify a predefined identity of the terminal device (1), comprising the following steps:
- storing (100) time-shifted measured location data of the portable terminal device (1) in the portable terminal device and an authentication device (2), the location data reflecting in their overview a movement of the portable terminal device (1) so that a movement profile of the terminal device (1) is created;
- extracting (101) at least one characteristic feature from the stored location data with the aid of a provided extraction logic, wherein the stored location data are analysed and movement trajectories of the terminal device (1) are identified, wherein the at least one characteristic feature is to be assigned to the terminal device (1) in order to use the at least one characteristic feature for authentication of the terminal device (1), so that not all stored location data are used for authentication, but rather only at least one characteristic feature; and
- authenticating (102) the portable terminal device (1) by means of the authentication device (2) depending on a comparison of the at least one characteristic feature with location data of the portable terminal device (1) measured in a time-shifted manner immediately prior to authentication,
wherein extracting (101) the characteristic feature and authenticating are carried out depending on a selection of all the data stored during a method step,
wherein the amount of data to be measured is preset,
wherein extracting (101) at least one characteristic feature is carried out iteratively in such a way that the at least one characteristic feature is always adapted,
wherein location data are only measured within a predetermined time window and the time window is relative.

2. Method according to Claim 1, **characterized in that**, together with the time-shifted measured location data, time information, a radio cell identification, router information, an access point identification, a GPS coordinate, a temperature, a position, an acceleration, a transmitter field strength, a brightness, a volume, a camera image, a hash value, a hash value of a camera image and/or user information are/is stored.

3. Method according to either of the preceding claims, **characterized in that** the measured location data are stored as relative location data.

4. Method according to any of the preceding claims, **characterized in that** the extraction logic has an indication of statistical characteristic variables.

5. Method according to any of the preceding claims, **characterized in that** the extraction logic provides clustering, a determination of frequencies, a determination of a mean value, a calculation of a standard deviation, a determination of Fourier components, an assignment of parameters and/or a correlation of parameters.

6. Method according to any of the preceding claims, **characterized in that** a threshold value is provided, which describes whether the at least one characteristic feature corresponds to the location data measured in a time-shifted manner immediately prior to authentication.

7. Method according to any of the preceding claims, **characterized in that** location data are at least partly extrapolated.

8. Method according to any of the preceding claims, **characterized in that** the comparison is carried out by the authentication device (2).

## Revendications

1. Procédé d'authentification d'un terminal (1) mobile par rapport à un dispositif d'authentification pour vérifier une identité prédéfinie du terminal (1), avec les étapes :
- sauvegarde (100) de données de localisation mesurées de manière décalée dans le temps du terminal (1) mobile dans le terminal mobile et un dispositif d'authentification (2), les données de localisation reflétant dans leur ensemble un déplacement du terminal (1) mobile de sorte qu'il en résulte un profil de déplacement du terminal (1) ;
- extraction (101) d'au moins une caractéristique propre à partir des données de localisation sauvegardées à l'aide d'une logique d'extraction fournie, les données de localisation sauvegardées étant analysées et des trajectoires de déplacement du terminal (1) étant identifiées, l'au moins une caractéristique propre étant à associer au terminal (1) pour utiliser l'au moins une caractéristique propre pour l'authentification du terminal (1) de telle sorte que les données de localisation sauvegardées ne sont pas toutes utilisées pour l'authentification, mais seulement au moins une caractéristique propre ; et
- authentification (102) du terminal (1) mobile par le dispositif d'authentification (2) en fonction d'une comparaison de l'au moins une caractéristique propre à des données de localisation du terminal (1) mobile directement mesurées avant l'authentification de manière décalée dans le temps,
l'extraction (101) de la caractéristique propre et l'authentification étant effectuées en fonction d'une sélection de toutes les données sauvegardées pendant une étape de procédé,
la quantité des données à mesurer étant réglée au préalable,
l'extraction (101) d'au moins une caractéristique propre étant effectuée de manière itérative de telle manière que l'au moins une caractéristique propre est systématiquement adaptée,
des données de localisation étant mesurées seulement dans une fenêtre de temps prédéfinie et la fenêtre de temps étant relative.

2. Procédé selon la revendication 1, **caractérisé en ce que** sont sauvegardés avec les données de localisation mesurées de manière décalée dans le temps y compris une information de temps, une identification de cellules radio, une information d'itinéraire, une identification de point d'accès, des coordonnées GPS, une température, une position, une accélération, une intensité de champ émetteur, une luminosité, un volume sonore, une image de caméra, une valeur de hachage, une valeur de hachage d'une image de caméra et/ou une informations d'utilisateur.

3. Procédé selon l'une des revendications précédentes, **caractérisé en ce que** les données de localisation mesurées sont sauvegardées en tant que données de localisation relatives.

4. Procédé selon l'une des revendications précédentes, **caractérisé en ce que** la logique d'extraction comporte un renvoi à des grandeurs caractéristiques statistiques.

5. Procédé selon l'une des revendications précédentes, **caractérisé en ce que** la logique d'extraction prévoit un groupage, une détermination de fréquences, une détermination d'une valeur moyenne, un calcul d'un écart type, une détermination de composantes de Fourier, une attribution de paramètres et/ou une corrélation de paramètres.

6. Procédé selon l'une des revendications précédentes, **caractérisé en ce qu'**une valeur seuil est fournie, laquelle décrit si l'au moins une caractéristique propre concorde avec les données de localisation directement mesurées avant l'authentification de manière décalée dans le temps.

7. Procédé selon l'une des revendications précédentes, **caractérisé en ce que** des données de localisation sont au moins en partie extrapolées.

8. Procédé selon l'une des revendications précédentes, **caractérisé en ce que** la comparaison est mise en œuvre par le dispositif d'authentification (2).
